# EUROPÄISCHE PATENTSCHRIFT

(11) **EP 3 798 772 B1**
(45) Veröffentlichungstag und Bekanntmachung des Hinweises auf die Patenterteilung: **02.11.2022**
(21) Anmeldenummer: 19199660.2
(22) Anmeldetag: 25.09.2019
(51) Int. Cl.: G05B 19/408, G05B 19/042, G05B 19/418

(54) **INDUSTRIE-PROZESSSTEUERUNG**
INDUSTRIAL PROCESS CONTROL
COMMANDE DE PROCESSUS INDUSTRIEL

(43) Veröffentlichungstag der Anmeldung: 31.03.2021
(73) Patentinhaber: Schneider Electric Industries SAS, 92500 Rueil Malmaison (FR)
(72) Erfinder: Emmert, Stefan Heinz, 97072 Würzburg (DE); Stahl, Maximilian Eugen, 97842 Karbach (DE)
(74) Vertreter: Manitz Finsterwald Patent- und Rechtsanwaltspartnerschaft mbB

(56) Entgegenhaltungen:
- WO-A1-2018/059855
- CN-A- 109 164 780
- CN-A- 109 213 066
- DE-A1-102016 118 613

## Beschreibung

Die vorliegende Erfindung betrifft eine Industrie-Prozesssteuerung, welche zumindest drei miteinander mittels einer Datenverbindung gekoppelte Feldgeräte umfasst. Die Feldgeräte steuern und/oder überwachen einen Industrieprozess. Dabei sind die Feldgeräte ausgebildete, eine Blockchain zu speichern, wobei die Blockchain mehrere Blöcke umfasst, wobei die Blöcke Nutzdaten speichern.

Ein Feldgerät gemäß dem Oberbegriff des Anspruchs 1 ist aus der DE 10 2016 118 613 A1 bekannt.

Um komplexere industrielle Prozesse zu steuern und/oder zu überwachen, werden üblicherweise miteinander gekoppelte Feldgeräte eingesetzt. Bei den Feldgeräten kann es sich beispielsweise um speicherprogrammierbare Steuerungen (SPS), um Sensoren, Antriebe (Drives) und dergleichen handeln. Bei dem Industrieprozess können Werkstücke z.B. gefertigt, transportiert und/oder sortiert werden.

Es besteht das Bedürfnis, Industrieprozesse gegen Manipulationen zu schützen und so die Prozesssicherheit zu gewährleisten. Der Schutz vor Manipulationen erhöht zudem die Zuverlässigkeit des Industrieprozesses. Allerdings darf sich die erhöhte Schutzwirkung vor Manipulationen nicht negativ auf die Performance des Industrieprozesses bzw. der Prozesssteuerung auswirken.

Es ist daher die der Erfindung zugrundeliegende Aufgabe, eine Industrie-Prozesssteuerung anzugeben, welche einen erhöhten Schutz gegen Manipulationen bietet und dadurch eine hohe Zuverlässigkeit besitzt, wobei die hohe Zuverlässigkeit mit geringem Aufwand realisiert wird.

Diese Aufgabe wird durch eine Industrie-Prozesssteuerung gemäß Anspruch 2 gelöst. Weitere Gegenstände der Erfindung sind ein Feldgerät gemäß Anspruch 1 und ein Verfahren gemäß Anspruch 12.

Gemäß der Erfindung zeichnet sich die Industrie-Prozesssteuerung dadurch aus, dass die Feldgeräte der Prozesssteuerung ausgebildet sind, einen oder mehrere Blöcke aus der Blockchain zu löschen und die Blockchain an die Veränderung durch das Löschen anzupassen, d.h. die Blockchain an die durch das Löschen bedingte Veränderung anzupassen.

Die Erfindung setzt auf der Erkenntnis auf, dass durch eine Blockchain, welche von den Feldgeräten der Prozesssteuerung betrieben wird, eine Erhöhung der Datensicherheit und ein Schutz vor Manipulationen der Daten der einzelnen Feldgeräte möglich ist. Allerdings ist der Betrieb einer Blockchain üblicherweise mit hohem Aufwand verbunden, zudem vergrößert sich der für die Blockchain benötigte Speicherplatz kontinuierlich, je mehr Daten in der Blockchain gespeichert werden. Bei Feldgeräten sind Rechenkapazität und Speicherplatz nicht in beliebigem Maße verfügbar, beispielsweise umfassen insbesondere Low-Cost-Feldgeräte häufig nur eine Speicherkapazität von z.B. 128 Megabyte. Erfindungsgemäß hat es sich daher als vorteilhaft herausgestellt, wenn Blöcke aus der Blockchain gelöscht werden können, so dass die Blockchain dauerhaft auch auf dem geringem zur Verfügung stehenden Speicherplatz von Feldgeräten gespeichert werden kann.

Das Löschen eines Blocks aus einer Blockchain ist üblicherweise bei Blockchains nicht vorgesehen. Aus diesem Grund muss die (verbleibende) Blockchain an die Veränderung durch das Löschen angepasst werden. Die Anpassung kann wiederum durch die Feldgeräte selbst vorgenommen werden, wie später noch genauer dargestellt.

Erfindungsgemäß wird somit die erhöhte Datensicherheit und der Schutz vor Manipulationen mit der Möglichkeit kombiniert, die Blockchain auch auf einfachen Feldgeräten zu implementieren. Die erhöhte Datensicherheit wird dadurch gewährleistet, dass die Nutzdaten nicht nur in einem einzelnen Feldgerät sondern - durch die Blockchain - in einer Vielzahl von Feldgeräten gespeichert werden, wodurch auch auf eine externe Speicherung verzichtet werden kann.

Genauer gesagt liegt auf den Feldgeräten der Prozesssteuerung dieselbe Blockchain vor. Die Feldgeräte bilden dabei Knoten (d.h. Nodes) der Blockchain. Die Blockchain ist ein Mechanismus zur dezentralen Speicherung von Nutzdaten, welche als verteiltes Register (d.h. als sogenanntes "Distributed Ledger") geführt wird. Jedes Feldgerät speichert eine eigene Kopie der Blockchain und schreibt diese fort. Änderungen an der Blockchain durch ein Feldgerät werden über die Datenverbindung den anderen Feldgeräten mitgeteilt.

Die Blockchain selbst umfasst eine verkettete Folge von (Daten-)Blöcken, wobei im Betrieb der Prozesssteuerung neue Blöcke von den Feldgeräten hinzugefügt werden können. Das Löschen eines oder mehrerer Blöcke der Blockchain wird (initial) ebenfalls von zumindest einem oder mehreren Feldgeräten vorgenommen.

Dem Hinzufügen und/oder Löschen eines Blocks müssen bevorzugt zumindest 51% der Feldgeräte (d.h. der Netzwerkteilnehmer) zustimmen. Auf diese Weise wird die Integrität der Blockchain sichergestellt und Angriffe wie manipulierte oder unzulässig gelöschte Daten werden unterbunden (falls ein Teilnehmer z.B. alle Daten löschen möchte).

Mit 51% der Feldgeräte kann auch gemeint sein, dass mehr als die Hälfte der Feldgeräte zustimmt.

Beim Hinzufügen bzw. Erzeugen eines Blocks muss der neue Block berechnet (d.h. erstellt) werden. Bei der Berechnung kann eine Prüfsumme bzw. ein Hashwert (siehe unten) berechnet werden, welcher auf Daten aus dem neuen Block beruht. Zudem kann beim Berechnen ein Verweis auf den vorhergehenden Block in den neuen Block integriert werden. Durch die Prüfsumme können nachträgliche Veränderungen an dem (neuen) Block erkannt werden.

Die Feldgeräte sind bevorzugt getrennte Einheiten, welche über die Datenverbindung zusammenwirken, um den Industrieprozess zu steuern und/oder zu überwachen. Insbesondere ist die Anzahl der Feldgeräte, d.h. die Anzahl der Knoten der Blockchain, konstant. Dies bedeutet, dass die Blockchain nicht auf die Aufnahme zusätzlicher Knoten eingerichtet werden muss, was die Implementierung der Blockchain weiter vereinfacht. Alternativ können auch neue Teilnehmer hinzugefügt werden, da jedoch die Anzahl der hinzugefügten Teilnehmer üblicherweise gering ist und das Hinzufügen eher die Ausnahme darstellt, sind die Auswirkungen auf die Einfachheit der Implementierung eher marginal.

Insbesondere kann ein Feldgerät ausgetauscht werden, z.B. durch ein neueres Modell. Die Anzahl der Feldgeräte bleibt hierdurch aber gleich.

Über die Datenverbindung können die Feldgeräte miteinander kommunizieren, um beispielsweise eine Konsensbildung über das Hinzufügen eines neuen Blocks oder das Löschen eines Blocks durchzuführen. Die Datenverbindung kann zugleich auch für die Überwachung und/oder Steuerung des industriellen Prozesses genutzt werden. Bei der Datenverbindung kann es sich beispielsweise um einen Feldbus handeln, z.B. Sercos III, EtherCat, EIP und dergleichen.

Vorteilhafte Weiterbildungen der Erfindung sind in der Beschreibung, den Unteransprüchen sowie den Zeichnungen angegeben.

Gemäß einer ersten Ausführungsform sind die Feldgeräte ausgebildet, in der Blockchain eine oder mehrere der folgenden Kategorien von Nutzdaten zu speichern:
- Events, beispielsweise Änderungen von Hard-, Soft- und/oder Firmware der Feldgeräte und/oder Fehler;
- Konfigurationen der Feldgeräte;
- von einem Benutzer eingegebene Daten.

Die zu speichernden Nutzdaten können über die Datenverbindung an die Feldgeräte, insbesondere alle Feldgeräte, übertragen werden. Beispielsweise kann die Änderung der Firmware eines Feldgeräts allen anderen Feldgeräten mitgeteilt werden, woraufhin dann alle Feldgeräte die Firmwareänderung in der Blockchain abspeichern.

In der Blockchain kann also insbesondere gespeichert werden, welche Änderungen von Hard-, Soft- und/oder Firmware an den Feldgeräten vorgenommen werden. Auf diese Weise kann später nachvollzogen werden, ob z.B. ein Feldgerät physikalisch ausgetauscht wurde oder ob Änderungen an der Soft- oder Firmware vorgenommen wurden. Dies ermöglicht die Erkennung von Manipulationen oder Änderungen, die bei Feldgeräten häufig einfach möglich sind, da Feldgeräte üblicherweise nur geringe Schutzmaßnahmen gegen Veränderungen aufweisen.

Zudem ist es möglich, auch von einem Benutzer gar nicht bewusst durchgeführte Änderungen nachzuvollziehen, die z.B. durch ein Programmier-Tool oder eine externe Wartungssoftware an den Feldgeräten vorgenommen wurden.

Auch können Anmeldevorgänge von Benutzern an den Feldgeräten in der Blockchain gespeichert werden. Es ist ebenfalls möglich, Fehler, welche von den Feldgeräten gemeldet werden, in der Blockchain abzuspeichern. Auf diese Weise kann mittels der Blockchain nachvollzogen werden, wann und wo Eingriffe beispielsweise in ein Ablaufprogramm (d.h. eine Software) von welchem Benutzer vorgenommen wurden. Veränderungen eines Angreifers können somit aufgespürt werden, wobei es für den Angreifer nahezu unmöglich gemacht wird, seine Spuren zu verwischen, da er dann auf zumindest 51% der Feldgeräte zugreifen müsste und dort die Blockchain entsprechend anpassen müsste. Die Prozesssicherheit wird hierdurch deutlich erhöht, wobei dies, wie hierin dargestellt, mit geringem Aufwand möglich ist.

Erfindungsgemäß wird die Blockchain dazu genutzt, Daten zu speichern, welche den Industrieprozess betreffen. Beispielsweise können Produktionsdaten, wie Rezepturen (G-Code), CNC-Abläufe, Dosierungen in der Pharmaindustrie, Produktionsparameter und dergleichen gespeichert werden. Hierdurch kann eine geräteübergreifende Konfiguration ermöglicht werden. Auch ist es möglich, einem Benutzer eine Datenschnittstelle zur Verfügung zu stellen, um beliebige Daten als Nutzdaten in der Blockchain zu speichern. Schließlich kann auch beispielsweise eine Konfiguration von Parametern für sogenannte "Safety"-Feldgeräte in der Blockchain gespeichert werden. Solche Feldgeräte können beispielsweise die Anforderungen nach "Safety Integrity Level" (SIL) erfüllen, beispielsweise nach SIL2 oder SIL3.

Gemäß einer Ausführungsform sind die Feldgeräte ausgebildet, eine Neuberechnung zumindest eines Teils der nach dem Löschen verbleibenden Blöcke durchzuführen, wobei die Neuberechnung bevorzugt vor dem (tatsächlichen) Löschen erfolgt. Alternativ kann die Neuberechnung auch nach dem Löschen durchgeführt werden. Durch die Neuberechnung kann die verbleibende Blockchain an die Veränderung durch das Erlöschen angepasst werden. Hierzu können die oben beschriebenen Vorgänge bei der Erstellung eines neuen Blocks entsprechend auf die verbleibenden Blöcke angewandt werden. Bei der Neuberechnung können die Nutzdaten in den Blocks der verbleibenden Blockchain unverändert bleiben, wobei bei der Neuberechnung beispielsweise die für die Verkettung der Blöcke notwendigen Informationen (d.h. Prüfsumme bzw. Hashwert, siehe nachfolgend) neu ermittelt werden können.

Gemäß einer weiteren Ausführungsform sind die Blöcke der Blockchain verkettet und weisen eine Reihenfolge auf. Die Verkettung zwischen zwei Blöcken umfasst insbesondere eine Prüfsumme, wobei bei der Neuberechnung der Blöcke die Prüfsumme neu berechnet wird. Die Verkettung der Blöcke erfolgt also beispielsweise dadurch, dass ein Block die Prüfsumme des vorhergehenden Blocks speichert und auf diese Weise eine eindeutige Reihenfolge der Blöcke festgelegt wird. Ein Zwischenschieben von Blöcken und ein Verändern des vorherigen Blocks werden durch die Prüfsumme unterbunden. Die Prüfsumme ist bevorzugt Teil des jeweiligen Blocks und besitzt dadurch einen direkten Effekt auf nachfolgende Blöcke. Die Prüfsumme kann auch als Checksumme oder Prüfwert bezeichnet werden und beispielsweise mittels des CRC-Algorithmus erstellt werden ("cyclic redundancy check"), insbesondere mittels CRC-32. Bei der Neuberechnung der Blöcke können die Prüfsummen jeweils vollständig neu berechnet werden.

Gemäß einer weiteren Ausführungsform umfasst die Prüfsumme eines jeweiligen Blocks einen Hashwert über zumindest einen Teil der Nutzdaten des Blocks. Alternativ kann der Hashwert auch beispielsweise über einen Header des Blocks gebildet werden. Der Hashwert kann beispielsweise mittels einer kryptographischen Hashfunktion, wie MD4, MD5 oder SHA ermittelt werden.

Insbesondere kann es sich bei der Berechnung der Prüfsumme oder des Hashwerts für einen Block und der Zustimmung zumindest 51% der Feldgeräte um die einzigen zwingenden Voraussetzungen handeln (neben dem Vorhandensein von Nutzdaten für den Block), um einen neuen Block der Blockchain hinzuzufügen. Das häufig bei Blockchains verwendete Konzept des "Proof of Work", welches hohe Rechenleistungen und einen hohen Energieeinsatz benötigt, wird damit nicht angewandt. Stattdessen ermöglicht es die einfache Ermittlung des Hashwerts auch mit der geringen auf Feldgeräten zur Verfügung stehenden Rechenleistung neue Blöcke zu der Blockchain hinzuzufügen. Das Hinzufügen von neuen Blöcken beeinträchtigt somit die Steuerung des Industrieprozesses nicht oder nur minimal.

Gemäß einer weiteren Ausführungsform sind die Feldgeräte ausgebildet, das Löschen durchzuführen, um den für die Blockchain benötigten Speicherplatz unter einem vorbestimmten Grenzwert zu halten. Der vorbestimmte Grenzwert kann insbesondere den Speicherplatz pro Feldgerät angeben, welcher für die Blockchain reserviert ist. Der vorbestimmte Grenzwert kann beispielsweise 2, 5, 10 oder 20 Megabyte sein. Der vorbestimmte Grenzwert und damit der Speicherplatz für die Blockchain sind insbesondere auf jedem der Feldgeräte gleich.

Wenn nun ein neuer Block für die Blockchain erzeugt werden soll, dann kann überprüft werden, ob mit dem neuen Block der zur Verfügung gestellte Speicherplatz ("Quota") für die Blockchain überschritten wird. Ist dies der Fall, dann werden, insbesondere nach Erstellung des neuen Blocks, ältere Blöcke gelöscht. Vor, mit oder nach dem Löschen wird für die verbleibenden Blöcke dann deren Prüfsumme jeweils neu berechnet (wie bereits erwähnt) und die neu berechnete Prüfsumme in dem jeweils folgenden Block gespeichert. Durch die Neuberechnung der Prüfsummen und die Speicherung der neuen Prüfsumme in dem jeweils folgenden Block wird die Konsistenz der Blockchain gewährleistet.

Nachdem für die Konsistenthaltung der Blockchain nach dem Löschen von Blöcken lediglich die Neuberechnung der Prüfsummen erforderlich ist und die Prüfsummen mit geringem Rechenaufwand ermittelbar sind, kann diese Berechnung ohne Probleme auf den Feldgeräten durchgeführt werden. Insbesondere führt jedes Feldgerät der Prozesssteuerung diese Berechnung unabhängig voneinander durch.

Beim Löschen von Blöcken können ein oder mehrere Blöcke gleichzeitig gelöscht werden.

Allgemein gesprochen kann das Löschen von Blöcken auf ein auslösendes Ereignisses hin erfolgen. Das Löschen von Blöcken kann wiederholt, zyklisch und/oder periodisch (z.B. täglich) erfolgen.

Gemäß einer Ausführungsform wird die Blockchain auf einer CF- oder SD-Karte gespeichert. Der Speicherplatz auf einer solchen Karte kann beispielsweise 128, 256 oder 512 Megabyte betragen. Auf der Speicherkarte können zudem die Software und/oder Gerätedaten des jeweiligen Feldgeräts gespeichert sein. Insbesondere kann der Gesamtspeicherplatz der Feldgeräte auf jeweils 128, 256 oder 512 Megabyte begrenzt sein.

Gemäß einer weiteren Ausführungsform umfasst die Blockchain einen Genesis-Block, wobei die Feldgeräte ausgebildet sind, beim Löschen von Blöcken den Genesis-Block unverändert zu belassen und/oder jeweils den oder die ältesten Blöcke zu löschen. Der älteste Block (neben dem Genesis-Block) enthält jeweils einen Verweis auf den Genesis-Block.

Der Genesis-Block ist der Ursprung der Blockchain. Als einziger Block umfasst der Genesis-Block keinen Verweis (z.B. mittels eines Hashwerts) auf einen vorhergehenden Block. Der Genesis-Block wird bevorzugt nicht gelöscht und bleibt dementsprechend immer erhalten.

Durch das Löschen der ältesten Blöcke wird eine Art Ringpuffer oder Ringspeicher geschaffen, welcher den Speicherplatz der Blockchain benutzt. Da für die Nachverfolgung bzw. Erkennung von Manipulationen und damit für die Datensicherheit hauptsächlich die jüngsten Nutzdaten von Interesse sind, können die älteren Blöcke und damit ältere Nutzdaten gelöscht werden. Bevorzugt werden niemals der jeweils neueste und/oder der Genesis-Block gelöscht.

Gemäß einer weiteren Ausführungsform sind die Feldgeräte ausgebildet, neue Blöcke der Blockchain zu erzeugen, insbesondere periodisch, wiederkehrend und/oder beim Vorliegen von zumindest einer vorbestimmten Menge von neuen Nutzdaten. Jedes einzelne Feldgerät kann also in der Lage sein, einen neuen Block zu schaffen. Für den neuen Block werden Nutzdaten gespeichert und danach wird ein Hashwert oder eine Prüfsumme von dem Feldgerät erzeugt. Es ist dementsprechend keine zentrale Einheit zur Erstellung eines neuen Blocks notwendig, vielmehr findet eine dezentrale Erstellung neuer Blöcke statt. Dies gilt auch für das Löschen von Blöcken, welches von jedem Feldgerät angestoßen werden kann.

Insbesondere können in jedem Block einige Kilobyte Nutzdaten gespeichert sein, z.B. bis zu 128 kByte, 256 kByte oder 512 kByte. Dementsprechend kann ein neuer Block angelegt werden, wenn 128 kByte, 256 kByte oder 512 kByte neue Nutzdaten vorliegen. Vorher können die Nutzdaten in zumindest einem Feldgerät zwischengespeichert werden.

Sobald eine Veränderung der Blockchain auftritt, sei es durch Hinzufügen oder Löschen von Blöcken, kann eine Kommunikation der Feldgeräte mittels der Datenverbindung erfolgen, um die Veränderungen an der Blockchain den anderen Feldgeräten mitzuteilen. Auf diese Weise liegt die Blockchain jeweils in ihrer aktuellen Form bevorzugt auf allen Feldgeräten identisch vor. Sofern zwischen den Feldgeräten Uneinigkeit über die Blockchain bestehen sollte, gilt eine Änderung an der Blockchain als angenommen, wenn zumindest 51% der Feldgeräte einer Änderung zustimmen.

Insbesondere speichert die Blockchain Informationen bzw. Nutzdaten von allen an der Blockchain beteiligten Feldgeräten, so dass in jedem Feldgerät die Nutzdaten aller anderen Feldgeräte vorhanden sind.

Gemäß einer weiteren Ausführungsform werden gelöschte Blöcke, insbesondere nur, in einer Zentraleinheit und/oder in einem einzigen Feldgerät gespeichert. Auf diese Weise können die gelöschten Blöcke später zur Nachverfolgung genutzt werden. Die Zentraleinheit kann Teil der Prozesssteuerung und über die Datenverbindung mit den Feldgeräten gekoppelt sein. Die Zentraleinheit kann insbesondere einen deutlich größeren Speicherplatz aufweisen als die jeweiligen Feldgeräte. Bei dem einzigen Feldgerät, welches die gelöschten Blöcke speichert, kann es sich insbesondere um ein Feldgerät mit großem Speicherplatz (z.B. mit mehr als 1 GB) handeln.

Gemäß einer weiteren Ausführungsform sind die Feldgeräte ausgebildet, insbesondere über die Datenverbindung, eine Zeitsynchronisation untereinander herzustellen. Durch die für die Blockchain ohnehin notwendige Datenkommunikation der Feldgeräte untereinander kann zugleich eine Zeitsynchronisation unter den Feldgeräten geschaffen werden. Dies reduziert Benutzereingriffe und verkürzt die Bereitstellungszeit für die Prozesssteuerung.

Die Erfindung betrifft außerdem ein Verfahren zur Erhöhung der Zuverlässigkeit einer Industrie-Prozesssteuerung gemäß Anspruch 12.

Schließlich betrifft die Erfindung auch ein Feldgerät für eine Industrie-Prozesssteuerung gemäß Anspruch 1.

Zu dem erfindungsgemäßen Verfahren und dem erfindungsgemäßen Feldgerät gelten die Aussagen zu der erfindungsgemäßen Prozesssteuerung entsprechend. Dies gilt insbesondere für Vorteile und Ausführungsformen.

Nachfolgend wird die Erfindung rein beispielhaft unter Bezugnahme auf die Zeichnungen beschrieben. Es zeigen:
- Fig. 1: einen Industrieprozess, welcher von einer Prozesssteuerung gesteuert wird;
- Fig. 2a und 2b: das Löschen eines Blocks aus einer Blockchain; und
- Fig. 3: die Abläufe beim Löschen und Hinzufügen eines Blocks.

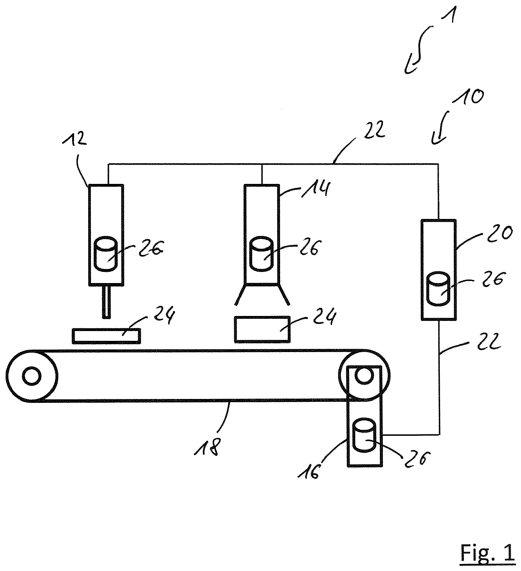

Fig. 1 zeigt einen Industrieprozess 1, welcher mittels einer Industrie-Prozesssteuerung 10 gesteuert und überwacht wird. Die Prozesssteuerung 10 umfasst ein erstes Feldgerät (Drive) in Form eines Fräsers 12, ein zweites Feldgerät in Form eines Tiefensensors 14, ein als Antrieb 16 eines Förderbands 18 ausgebildetes drittes Feldgerät und ein viertes Feldgerät, welches eine speicherprogrammierbare Steuerung (SPS) 20 ist. Die Feldgeräte 12, 14, 16, 20 sind miteinander mittels Datenverbindungen 22 gekoppelt. Die Feldgeräte 12, 14, 16, 20 wirken zusammen, um auf dem Förderband 18 transportierte Werkstücke 24 zu bearbeiten.

In jedem der Feldgeräte 12, 14, 16, 20 ist eine Blockchain 26 gespeichert. Genauer gesagt speichert jedes Feldgerät 12, 14, 16, 20 eine Kopie derselben Blockchain 26. Über die Datenverbindungen 22 wird die Blockchain 26 auf den Feldgeräten 12, 14, 16, 20 konsistent gehalten.

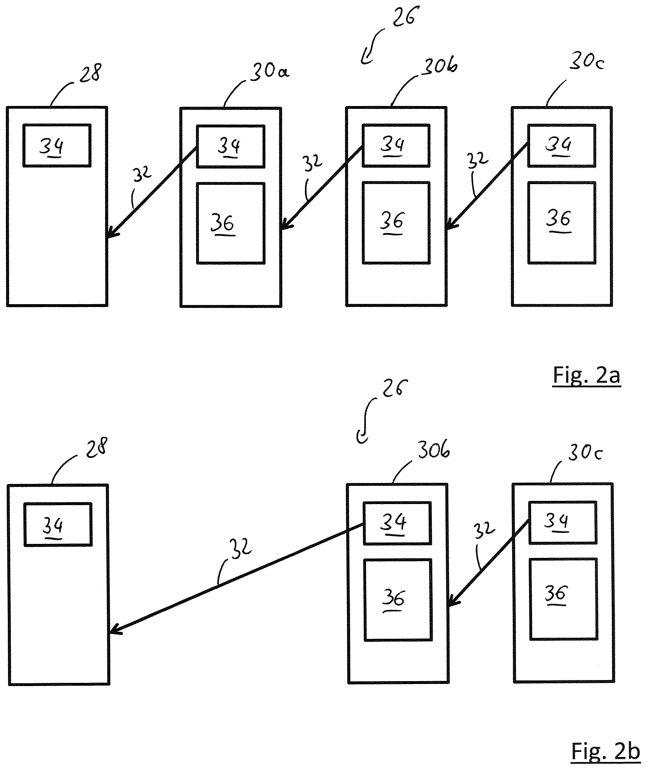

Die Blockchain 26 umfasst Blöcke wie in den Fig. 2a und 2b näher dargestellt. Die Blockchain 26 umfasst einen Genesis-Block 28 sowie mehrere weitere Blöcke 30, wobei in Fig. 2a drei weitere Blöcke 30a, 30b und 30c gezeigt sind. Jeder der weiteren Blöcke 30 umfasst einen Verweis 32 auf den vorherigen Block 30 bzw. 28, wobei der Verweis in Fig. 2 jeweils durch einen Pfeil dargestellt ist. Der Verweis 32 umfasst einen Hashwert 34 über Nutzdaten 36 und die weiteren Daten des vorherigen Blocks 28, 30.

Soll nun Block 30a gelöscht werden, so werden die Verweise 32 und damit die Hashwerte 34 von den Feldgeräten 12, 14, 16, 20 neu berechnet. Der Block 30b speichert dann nicht mehr den Hashwert 34 für den Block 30a sondern nun den Hashwert des Genesis-Blocks 28. Ebenso muss für den Block 30c der Hashwert 34 neu berechnet werden, da der Hashwert 34 beispielsweise den gesamten Block 30b betrifft, welcher sich durch den geänderten Vorgänger in Form des Genesis-Blocks 28 nun auch im Block 30b geändert hat.

Durch das Löschen des Blocks 30a kann die Größe der Blockchain 26 begrenzt werden.

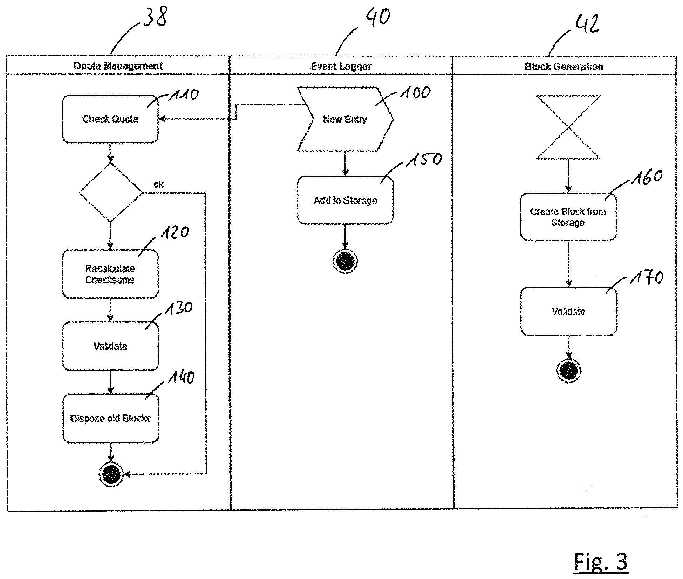

Fig. 3 zeigt drei Module, welche in jedem der Feldgeräte 12, 14, 16, 20 vorgehalten werden können und dort von einer jeweiligen Recheneinrichtung (nicht gezeigt) des Feldgeräts 12, 14, 16, 20 ausgeführt werden können. Die Feldgeräte 12, 14, 16, 20 umfassen ein Lösch-Modul 38, ein Log-Modul 40 und ein Erzeugungs-Modul 42.

Das Lösch-Modul 38 dient zum Löschen von Blöcken 30, wohingegen das Erzeugungs-Modul 42 neue Blöcke 30 erzeugt. Das Log-Modul 40 protokolliert Ereignisse in den Feldgeräten 12, 14, 16, 20. Tritt ein solches Ereignis ein, wird von dem Log-Modul 40 ein Verfahrensschritt 100 ausgeführt, welcher anzeigt, dass ein neuer Eintrag in die Blockchain 26 gewünscht ist. Dies führt dazu, dass im Verfahrensschritt 110 von dem Lösch-Modul 38 überprüft wird, ob noch genügend Speicherplatz für die Blockchain 26 zur Verfügung steht. Ist dies nicht der Fall, so werden im Schritt 120 die zu löschenden Blöcke 30 festgelegt und die Hashwerte 34 der verbleibenden Blöcke 30 neu berechnet. Im Schritt 130 werden dann die neu berechneten Hashwerte 34 überprüft und im Schritt 140 die ausgewählten Blöcke 30 gelöscht.

Ist genügend Speicherplatz vorhanden, so werden die Schritte 120 bis 140 übersprungen.

Nachdem nun ein neuer Block 30 erzeugt werden kann, wird durch den Schritt 150 das Erzeugungs-Modul 42 aktiviert, welches im Schritt 160 einen neuen Block 30 aus den bereits zur Verfügung stehenden Nutzdaten 36 erzeugt und den neuen Block 30 im Schritt 170 validiert.

Die auf diese Weise veränderte Blockchain 26 wird dann an die übrigen Feldgeräte 12, 14, 16, 20 übertragen, dort überprüft und nach erfolgreicher Überprüfung in den anderen Feldgeräten 12, 14, 16, 20 abgespeichert.

Es ist zu erkennen, dass die zur Aufrechterhaltung der Blockchain 26 über einen langen Zeitraum notwendigen Schritte mit geringem Aufwand und damit auch von kostengünstiger Hardware durchführbar sind. Auf diese Weise werden die Vorteile der Manipulationssicherheit, Datensicherheit und erhöhten Zuverlässigkeit für Prozesssteuerungen mit Feldgeräten bereitgestellt.

### Bezugszeichenliste

- 1: Industrieprozess
- 10: Prozesssteuerung
- 12: Fräser
- 14: Tiefensensor
- 16: Antrieb
- 18: Förderband
- 20: SPS
- 22: Datenverbindung
- 24: Werkstück
- 26: Blockchain
- 28: Genesis-Block
- 30: Block
- 32: Verweis
- 34: Hashwert
- 36: Nutzdaten
- 38: Lösch-Modul
- 40: Log-Modul
- 42: Erzeugungs-Modul

- 100: neuer Eintrag
- 110: Überprüfung Speicherplatz
- 120: Hashwert neu berechnen
- 130: Hashwert überprüfen
- 140: Blöcke löschen
- 150: Aktivieren Erzeugungsmodul
- 160: Erzeugung Block
- 170: Validierung neuer Block

## Patentansprüche

1. Feldgerät (12, 14, 16, 20) für eine Industrie-Prozesssteuerung (10), wobei das Feldgerät (12, 14, 16, 20) ausgebildet ist, einen Industrieprozess (1) zu steuern und/oder zu überwachen, wobei das Feldgerät (12, 14, 16, 20) ferner ausgelegt ist, mittels einer Datenverbindung (22) zu kommunizieren und eine Blockchain (26) zu speichern, wobei die Blockchain (26) mehrere Blöcke (28, 30) umfasst, wobei die Blöcke (30) Daten, welche den Industrieprozess (1) betreffen, speichern,
**dadurch gekennzeichnet, dass**
das Feldgerät (12, 14, 16, 20) ausgebildet ist, einen oder mehrere Blöcke (30) aus der Blockchain (26) zu löschen und die Blockchain (26) an die Veränderung durch das Löschen anzupassen.

2. Industrie-Prozesssteuerung (10) umfassend zumindest drei miteinander mittels einer Datenverbindung (22) gekoppelte Feldgeräte (12, 14, 16, 20) gemäß Anspruch 1.

3. Prozesssteuerung (10) nach Anspruch 2,
wobei die Feldgeräte (12, 14, 16, 20) ausgebildet sind, in der Blockchain (26) eine oder mehrere der folgenden Kategorien von Nutzdaten zu speichern:
- Events, beispielsweise Änderungen von Hard-, Soft- und/oder Firmware und/oder Fehler;
- Konfigurationen der Feldgeräte (12, 14, 16, 20);
- von einem Benutzer eingegebene Daten.

4. Prozesssteuerung (10) nach Anspruch 2 oder 3,
wobei die Feldgeräte (12, 14, 16, 20) ausgebildet sind, eine Neuberechnung zumindest eines Teils der nach dem Löschen verbleibenden Blöcke (28, 30) durchzuführen, wobei die Neuberechnung bevorzugt vor dem Löschen erfolgt.

5. Prozesssteuerung (10) nach Anspruch 4,
wobei die Blöcke (28, 30) der Blockchain (26) verkettet sind und eine Reihenfolge aufweisen, wobei die Verkettung zwischen zwei Blöcken (28, 30) eine Prüfsumme (34) umfasst, wobei bei der Neuberechnung der Blöcke (28, 30) die Prüfsummen (34) neu berechnet werden.

6. Prozesssteuerung (10) nach Anspruch 5,
wobei die Prüfsumme (34) eines jeweiligen Blocks (30) einen Hashwert über zumindest einen Teil der Nutzdaten des Blocks umfasst.

7. Prozesssteuerung (10) nach einem der Ansprüche 2 bis 6,
wobei die Feldgeräte (12, 14, 16, 20) ausgebildet sind, das Löschen durchzuführen, um den für die Blockchain (26) benötigten Speicherplatz unter einem vorbestimmten Grenzwert zu halten.

8. Prozesssteuerung (10) nach einem der Ansprüche 2 bis 7,
wobei die Blockchain (26) einen Genesis-Block (28) umfasst und wobei die Feldgeräte (12, 14, 16, 20) ausgebildet sind, beim Löschen von Blöcken (30) den Genesis-Block (28) unverändert zu belassen und/oder jeweils den oder die ältesten Blöcke (30) zu löschen.

9. Prozesssteuerung (10) nach einem der Ansprüche 2 bis 8,
wobei die Feldgeräte (12, 14, 16, 20) ausgebildet sind, neue Blöcke (30) der Blockchain (26) zu erzeugen, insbesondere periodisch, wiederkehrend und/oder beim Vorliegen von zumindest einer vorbestimmten Menge von neuen Nutzdaten (36).

10. Prozesssteuerung (10) nach einem der Ansprüche 2 bis 9,
wobei gelöschte Blöcke (30), insbesondere nur, in einer Zentraleinheit und/oder in einem einzigen Feldgerät (12, 14, 16, 20) gespeichert werden.

11. Prozesssteuerung (10) nach einem der Ansprüche 2 bis 10,
wobei die Feldgeräte (12, 14, 16, 20) ausgebildet sind, insbesondere über die Datenverbindung (22), eine Zeitsynchronisation untereinander herzustellen.

12. Verfahren zur Erhöhung der Zuverlässigkeit einer Industrie-Prozesssteuerung (10), welche zumindest drei miteinander mittels einer Datenverbindung gekoppelte Feldgeräte (12, 14, 16, 20) umfasst, wobei die Feldgeräte (12, 14, 16, 20) einen Industrieprozess (1) steuern und/oder überwachen,
wobei die Feldgeräte (12, 14, 16, 20) eine Blockchain (26) speichern, wobei die Blockchain (26) mehrere Blöcke (28, 30) umfasst, wobei die Blöcke (30) Daten, welche den Industrieprozess (1) betreffen, speichern, **dadurch gekennzeichnet, dass** ein oder mehrere Blöcke (30) aus der Blockchain (26) gelöscht werden und die Blockchain (26) an die Veränderung durch das Löschen angepasst wird.

## Claims

1. A field device (12, 14, 16, 20) for an industrial process controller (10),
wherein the field device (12, 14, 16, 20) is configured to control and/or monitor an industrial process (1), wherein the field device (12, 14, 16, 20) is further adapted to communicate by means of a data link (22) and to store a block chain (26), wherein the block chain (26) comprises a plurality of blocks (28, 30), and wherein the blocks (30) store data that relate to the industrial process (1),
**characterized in that**
the field device (12, 14, 16, 20) is configured to delete one or more blocks (30) from the block chain (26) and to adapt the block chain (26) to the change caused by the deletion.

2. An industrial process controller (10) comprising at least three field devices (12, 14, 16, 20) in accordance with claim 1 coupled to one another by means of a data link (22).

3. A process controller (10) in accordance with claim 2,
wherein the field devices (12, 14, 16, 20) are configured to store one or more of the following categories of use data in the block chain (26):
- events, for example, changes of hardware, software and/or firmware and/or errors;
- configurations of the field devices (12, 14, 16, 20); and
- data input by a user.

4. A process controller (10) in accordance with claim 2 or claim 3,
wherein the field devices (12, 14, 16, 20) are configured to perform a recalculation of at least some of the blocks (28, 30) remaining after the deletion, with the recalculation preferably taking place before the deletion.

5. A process controller (10) in accordance with claim 4,
wherein the blocks (28, 30) of the block chain (26) are linked and have a sequence, wherein the chain link between two blocks (28, 30) comprises a checksum (34), and wherein the checksums (34) are recalculated on the recalculation of the blocks (28, 30).

6. A process controller (10) in accordance with claim 5,
wherein the checksum (34) of a respective block (30) comprises a hash value relating to at least some of the use data of the block.

7. A process controller (10) in accordance with any one of the claims 2 to 6, wherein the field devices (12, 14, 16, 20) are configured to perform the deletion in order to keep the memory space required for the block chain (26) below a predetermined limit value.

8. A process controller (10) in accordance with any one of the claims 2 to 7, wherein the block chain (26) comprises a genesis block (28), and wherein the field devices (12, 14, 16, 20) are configured to leave the genesis block (28) unchanged and/or to delete the respective oldest block or blocks (30) on the deletion of blocks (30).

9. A process controller (10) in accordance with any one of the claims 2 to 8, wherein the field devices (12, 14, 16, 20) are configured to create new blocks (30) of the block chain (26), in particular periodically, in a recurring manner and/or on the presence of at least a predetermined volume of new use data (36).

10. A process controller (10) in accordance with any one of the claims 2 to 9, wherein deleted blocks (30) are stored, in particular are only stored, in a central unit and/or in a single field device (12, 14, 16, 20).

11. A process controller (10) in accordance with any one of the claims 2 to 10, wherein the field devices (12, 14, 16, 20) are configured to establish a time synchronization with one another, in particular via the data link (22).

12. A method of increasing the reliability of an industrial process controller (10) which comprises at least three field devices (12, 14, 16, 20) coupled to one another by means of a data link, with the field devices (12, 14, 16, 20) controlling and/or monitoring an industrial process (1),
wherein the field devices (12, 14, 16, 20) store a block chain (26), wherein the block chain (26) comprises a plurality of blocks (28, 30), and wherein the blocks (30) store data that relate to the industrial process (1), **characterized in that**
one or more blocks (30) are deleted from the block chain (26) and the block chain (26) is adapted to the change caused by the deletion.

## Revendications

1. Appareil de terrain (12, 14, 16, 20) pour une commande de processus industriel (10), l'appareil de terrain (12, 14, 16, 20) étant réalisé pour commander et/ou surveiller un processus industriel (1), l'appareil de terrain (12, 14, 16, 20) étant en outre conçu pour communiquer au moyen d'une liaison de données (22) et pour stocker une chaîne de blocs (26), la chaîne de blocs (26) comprenant plusieurs blocs (28, 30), les blocs (30) stockant des données concernant le processus industriel (1),
**caractérisé en ce que**
l'appareil de terrain (12, 14, 16, 20) est réalisé pour effacer un ou plusieurs blocs (30) de la chaîne de blocs (26) et pour adapter la chaîne de blocs (26) à la modification résultant de l'effacement.

2. Commande de processus industriel (10),
comprenant au moins trois appareils de terrain (12, 14, 16, 20) selon la revendication 1, qui sont couplés entre eux au moyen d'une liaison de données (22).

3. Commande de processus (10) selon la revendication 2,
dans laquelle les appareils de terrain (12, 14, 16, 20) sont réalisés pour stocker dans la chaîne de blocs (26) une ou plusieurs des catégories suivantes de données utiles :
- des événements, par exemple des modifications de matériel, de logiciel et/ou de micrologiciel (firmware), et/ou des erreurs ;
- des configurations des appareils de terrain (12, 14, 16, 20) ;
- les données saisies par un utilisateur.

4. Commande de processus (10) selon la revendication 2 ou 3,
dans laquelle les appareils de terrain (12, 14, 16, 20) sont réalisés pour effectuer un nouveau calcul d'une partie au moins des blocs (28, 30) restant après l'effacement, le nouveau calcul étant effectué de préférence avant l'effacement.

5. Commande de processus (10) selon la revendication 4,
dans laquelle les blocs (28, 30) de la chaîne de blocs (26) sont concaténés et présentent un ordre chronologique, la concaténation entre deux blocs (28, 30) comprenant une somme de contrôle (34), les sommes de contrôle (34) étant recalculées lors du nouveau calcul des blocs (28, 30).

6. Commande de processus (10) selon la revendication 5,
dans laquelle la somme de contrôle (34) d'un bloc respectif (30) comprend une valeur de hachage sur une partie au moins des données utiles du bloc.

7. Commande de processus (10) selon l'une des revendications 2 à 6, dans laquelle les appareils de terrain (12, 14, 16, 20) sont réalisés pour effectuer l'effacement afin de maintenir l'espace mémoire nécessaire à la chaîne de blocs (26) en dessous d'une valeur limite prédéterminée.

8. Commande de processus (10) selon l'une des revendications 2 à 7, dans laquelle la chaîne de blocs (26) comprend un bloc Genesis (28), et les appareils de terrain (12, 14, 16, 20) sont réalisés pour laisser le bloc Genesis (28) inchangé lors de l'effacement de blocs (30) et/ou pour effacer respectivement le ou les blocs les plus anciens (30).

9. Commande de processus (10) selon l'une des revendications 2 à 8, dans laquelle les appareils de terrain (12, 14, 16, 20) sont réalisés pour générer de nouveaux blocs (30) de la chaîne de blocs (26), en particulier de manière périodique, récurrente et/ou en présence d'au moins une quantité prédéterminée de nouvelles données utiles (36).

10. Commande de processus (10) selon l'une des revendications 2 à 9, dans laquelle des blocs effacés (30) sont stockés, en particulier uniquement, dans une unité centrale et/ou dans un seul appareil de terrain (12, 14, 16, 20).

11. Commande de processus (10) selon l'une des revendications 2 à 10, dans laquelle les appareils de terrain (12, 14, 16, 20) sont réalisés pour établir une synchronisation temporelle entre eux, en particulier par l'intermédiaire de la liaison de données (22).

12. Procédé pour augmenter la fiabilité d'une commande de processus industriel (10), qui comprend au moins trois appareils de terrain (12, 14, 16, 20) couplés entre eux au moyen d'une liaison de données, les appareils de terrain (12, 14, 16, 20) commandant et/ou surveillant un processus industriel (1),
dans lequel
les appareils de terrain (12, 14, 16, 20) stockent une chaîne de blocs (26), la chaîne de blocs (26) comprend plusieurs blocs (28, 30),
les blocs (30) stockent des données concernant le processus industriel (1), **caractérisé en ce que**
un ou plusieurs blocs (30) sont effacés de la chaîne de blocs (26), et la chaîne de blocs (26) est adaptée à la modification résultant de l'effacement.
